# EUROPEAN PATENT SPECIFICATION

(11) **EP 4 493 971 B1**
(45) Date of publication and mention of the grant of the patent: **06.05.2026**
(21) Application number: 23716660.8
(22) Date of filing: 13.03.2023
(51) Int. Cl.: G02B 7/02, G02B 7/08, H02K 41/035, G01D 5/28

(54) **DEVICE FOR MOVEMENT OF AN OPTICAL UNIT, LASER PROCESS HEAD COMPRISING THE DEVICE AND EQUIPMENT COMPRISING THE LASER PROCESS HEAD**
VORRICHTUNG ZUR BEWEGUNG EINER OPTISCHEN EINHEIT, LASERPROZESSKOPF MIT DER VORRICHTUNG UND AUSRÜSTUNG MIT DEM LASERPROZESSKOPF
DISPOSITIF DE DÉPLACEMENT D'UNE UNITÉ OPTIQUE, TÊTE DE TRAITEMENT LASER COMPRENANT LE DISPOSITIF ET ÉQUIPEMENT COMPRENANT LA TÊTE DE TRAITEMENT LASER

(30) Priority: 14.03.2022 IT 202200004877
(43) Date of publication of application: 22.01.2025
(73) Proprietor: EL.EN. S.p.A., 50041 Calenzano (FI) (IT)
(72) Inventor: MASOTTI, Giovanni, 50041 Calenzano (FI) (IT); BOVE, Angelo, 50041 Calenzano (FI) (IT); LENZI, Francesco, 50041 Calenzano (FI) (IT)
(74) Representative: Mannucci, Michele
(86) International application number: PCT/IB2023/052400
(87) International publication number: WO 2023/175474

(56) References cited:
- EP-A2- 0 884 564
- US-A1- 2012 087 022
- US-B1- 7 859 144
- US-B2- 9 800 128

## Description

### TECHNICAL FIELD

The invention relates to a device for the movement of a focusing lens for a laser process head.

### BACKGROUND ART

Laser sources of various kinds find application in many sectors, both medical and industrial. The laser beam generated by a source must be focused on a surface where it is necessary to concentrate the laser energy, for example to perform cutting, welding, marking or other operations. For this purpose, devices for moving a focusing lens, i.e. devices for focusing the laser beam, are provided. When the laser beam and the workpiece move rapidly relative to each other, it may be necessary to make the focusing lens perform rapid focusing movements along the optical axis thereof due to the variation in the distance between the laser head and the surface on which the laser radiation is to be focused.

US 2012/087022 A1 discloses a linear motor for moving a lens. The linear motor comprises a moving magnet having a cylindrical shape and a static coil.

US 9 800 128 B2 discloses a linear direct-current motor for positioning a lens comprising a lens frame, a guide rail and two symmetrically arranged actuators, each comprising a static magnet and a moving coil.

US 7 859 144 B1 discloses an electromagnetic motor comprising a moving magnetic piston and two static coils with opposite winding.

It would therefore be useful to have a system capable of imposing rapid and precise focusing movements on the focusing lens.

### SUMMARY

The invention relates to a device for the movement of a focusing lens according to claim 1.

To obtain a more balanced thrust, and avoid the generation of torsion moments on the optical unit, the movement device comprises a second magnetic actuator, having a second electromagnetic stator integral with the body and a second magnetic piston constrained to the optical unit. The second magnetic piston is housed in a second seat formed in the second electromagnetic stator and is movable, advantageously without contact with the second seat, along a second axis of motion parallel to the translation axis of the optical unit.

To obtain a balanced thrust, without generating a moment on the optical unit, the first magnetic actuator and the second magnetic actuator are arranged symmetrically with respect to a plane of symmetry of the optical unit, orthogonal to a plane containing the first axis of motion of the first magnetic actuator and of the second axis of motion of the second magnetic actuator.

The guide system comprises a first guide and a second guide, parallel to each other and symmetrical with respect to the plane of symmetry. The slide comprises a first shoe slidingly engaged in the first guide and a second shoe slidingly engaged in the second guide. In advantageous embodiments, at least one of said first shoe and second shoe is connected to the optical unit by an arm having notches adapted to allow flexural deformations of the arm along the direction of the axis joining the centre of the shoes.

In some embodiments, each magnetic piston has a cylindrical configuration with an axis parallel to the direction of movement of the magnetic piston within the seat of the electromagnetic stator and with opposite magnetic poles aligned along the axis of the magnetic piston.

In turn, each electromagnetic stator may comprise a cylindrical part defining the sliding seat of the respective magnetic piston. Associated with the cylindrical wall of each electromagnetic stator is at least a first electro-conductive coil surrounding the respective magnetic piston and coaxial thereto. Preferably, the cylindrical wall of each electromagnetic stator is associated with a pair of electro-conductive coils surrounding the respective magnetic piston and coaxial thereto. The two electro-conductive coils may be connected in series with each other and configured and connected to a source of current so that the same current flows in series in the two electro-conductive coils, clockwise in one of the coils and anti-clockwise in the other, and vice versa. As will become apparent from the following description, a double force generated by the linear magnetic actuator is thus obtained.

Further advantageous features and embodiments of the device for the movement of a focusing lens are described below and are defined in the appended claims.

### BRIEF DESCRIPTION OF THE DRAWINGS

The invention will be better understood by following the description and the accompanying drawings, which illustrate an exemplifying and non-limiting embodiment of the invention. More particularly, the drawings show:
Fig. 1 an isometric view of the device for the movement of an optics for a laser beam or the like in a direction parallel to the optical axis;
Fig. 2 a sectional view of the device of Fig. 1 according to a plane of symmetry containing the optical axis of the focusing lens;
Fig. 3 a section through one of the magnetic actuators of the movement device;
Fig. 4 a front view of the movement device;
Figs. 5A and 5B an enlargement of detail V of Fig. 4;
Fig. 6 a schematic isometric view of an improved position detector device which is not covered by the subject-matter of the claims;
Fig. 7 a plan view of a cylindrical lens of the sensor of Fig. 6;
Fig. 8 a view according to VIII-VIII of Fig. 7;
Fig. 9 a side view of the sensor in an intermediate position;
Fig. 10A a view according to X-X of Fig.;
Fig. 11 a view similar to the view of Fig. 9 in a position shifted to one end of the sensor stroke;
Fig.12 a view according to XII-XII of Fig. 11;
Fig. 13 a view similar to the view of Figs. 9 in a position shifted to the opposite end;
Fig. 14 a view according to XIV-XIV of Fig. 13; and
Fig. 15 a schematic view of an application of a movement device.

### DETAILED DESCRIPTION

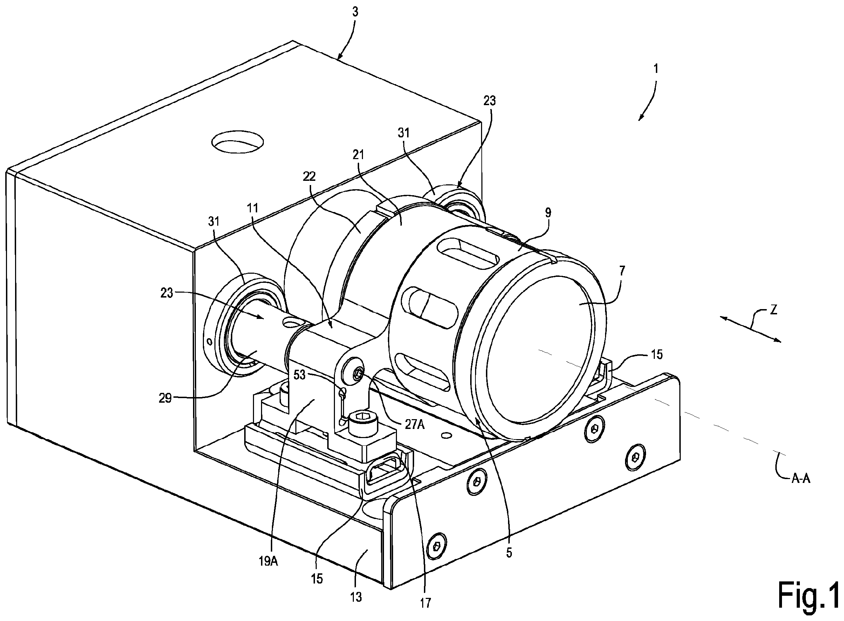

An embodiment of a device for the movement of a focusing lens is illustrated in Figs. 1 to 5. More specifically, Fig. 1 shows an isometric view of the movement device, indicated as a whole with reference numeral 1.

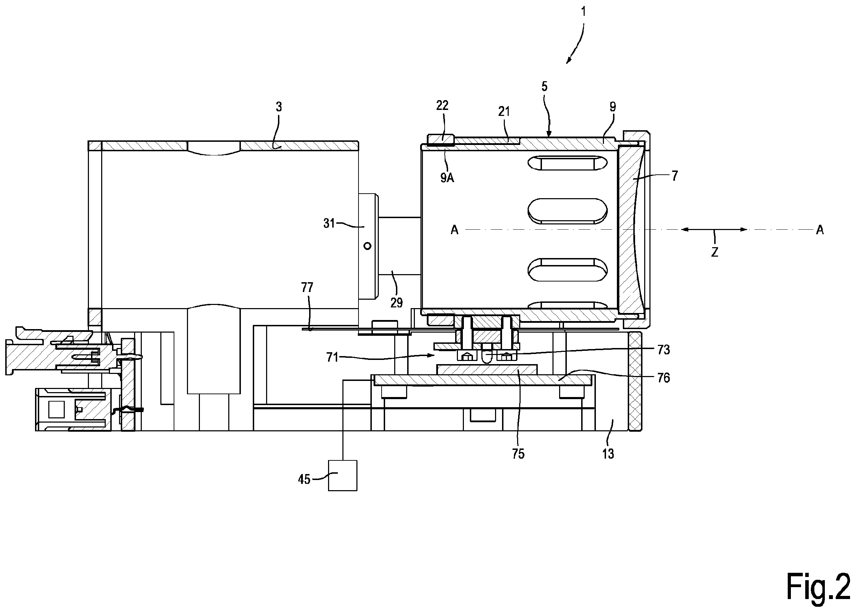

The movement device 1 comprises a body 3, which in use is integral with a laser process head. An optical unit 5 is mounted on the body 3, which is movable with respect to the body 3 according to a translational direction parallel to the optical axis of a focusing lens, mounted on the optical unit 5. The translation axis is indicated with Z. The focusing lens is indicated with reference numeral 7 and can be seen in particular in Fig. 2, which shows a section of the movement device 1 according to a plane of symmetry containing the optical axis A-A of the focusing lens 7. The focusing lens 7 is mounted in a seat formed in a sleeve 9 forming part of the optical unit 5.

The sleeve 9 is integral with a slide or carriage 11, which is movably mounted on the body 3, so as to be able to perform a controlled movement in the direction of the translation axis Z, parallel to the optical axis A-A of the focusing lens 7.

More specifically, the slide 11 is slidingly mounted on a base 13 forming part of the body 3. A guide system for the slide 11 is fixed to the base 13. According to the invention, the guide system comprises a first linear guide 15 and a second linear guide 15. The pair of linear guides 15 are parallel to each other and to the translation axis Z. The two linear guides 15 are arranged symmetrically with respect to a plane of symmetry (coinciding with the plane of the section of Fig. 2), which contains the optical axis A-A of the focusing lens 7.

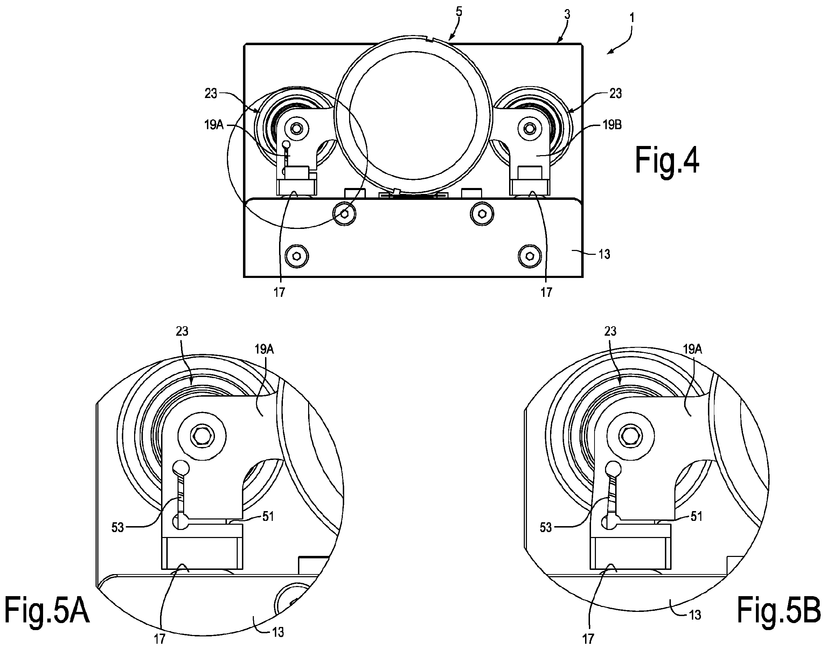

In each guide 15 a respective slide 17 is slidingly engaged, rigidly connected to brackets or arms 19A, 19B, see in particular Figs. 1 and 4, forming part of the slide 11. In the illustrated embodiment, the brackets 19A, 19B are in turn rigidly connected to a collar 21, which is used to mount the sleeve 9. As can be seen in Fig. 2, in the illustrated embodiment, the sleeve 9 is connected to the collar 21 by means of a threaded ring nut 22, screwed onto a threaded portion 9A of the sleeve 9.

With this configuration, the sleeve 9 and the relative optics contained therein (in particular the focusing lens 7) can be easily replaced without modifying the mechanical parts of the device 1, simply by unscrewing the threaded ring nut 22 and replacing the sleeve 9.

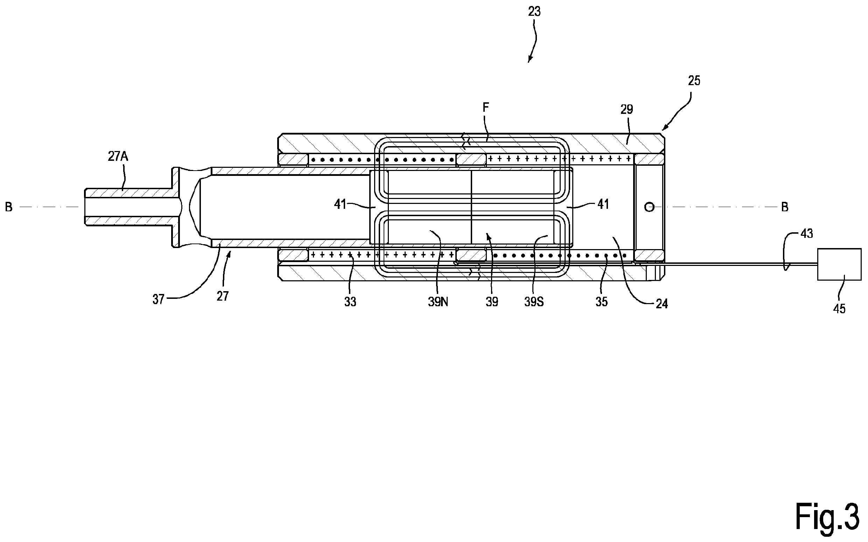

The movement of the optical unit 5 along the translation axis Z represents a focusing movement, since it involves the translation of the focusing lens 7 in the direction of the optical axis A-A of the latter. According to the invention, the translation movement along the translation axis Z is imparted by two substantially identical linear magnetic actuators 23, one of which is shown in Fig. 3 in a section along a plane containing the axis of the magnetic actuator 23. The two linear magnetic actuators 23 are arranged symmetrically with respect to the plane of symmetry containing the axis A-A of the focusing lens 7 (i.e. the plane of the section of Fig. 2).

According to the invention, each magnetic actuator 23 comprises an electromagnetic stator 25 and a magnetic piston 27, housed movable in the direction of its own axis in a seat 24 formed in the electromagnetic stator 25. The magnetic piston 27 protrudes from one end of the seat 24 to be fixed to the slide 11. In this way, the magnetic piston is rigidly connected to the slide 11 guided by it, so as to be able to move in the respective seat 24 without contact between the magnetic piston 27 and the seat 24.

In the illustrated embodiment, each electromagnetic stator 25 has a substantially cylindrical shape and has a cylindrical wall 29, fixed with a ring nut 31 to the body 3 of the movement device 1. The cylindrical wall 29 is advantageously made of a material with high magnetic permeability.

A system of electro-conductive coils is housed inside the cylindrical wall 29 of each magnetic actuator 23. In the illustrated embodiment, each electromagnetic stator 25 comprises two electro-conductive coils shown in Fig. 3 and indicated with 33 and 35. This configuration allows particular advantages to be obtained in terms of speed and precision of the movement along the translation axis Z of the optical unit 5, described further on.

As schematically indicated in Fig. 3, the electro-conductive coils 33 and 35 are encapsulated in an electrically insulating and thermo-conductive resin, which establishes a thermal bridge with the respective cylindrical wall 29, to which the electro-conductive coils 33, 35 are fixed, so as to increase the heat transfer by conduction from the electro-conductive coils 33, 35 to the cylindrical wall 29. The latter is in turn in intimate thermal contact with the body 3, for example through a thermo-conductive material and/or with the aid of a refrigeration circuit, not shown, to facilitate heat dissipation from the cylindrical wall 29 to the body 3 and from this to the environment, for example by finning (not shown). The arrangement is such as to dissipate the heat generated by the currents circulating in the electro-conductive coils 33, 35 towards the outside.

In the illustrated embodiment, the two electro-conductive coils 33, 35 of each magnetic actuator 23 are connected to each other in series, arranged in sequence along the winding axis and wound in opposite directions, as schematically indicated in Fig. 3. In general, the arrangement of the coils and their connection to the electric current source is such that if the current in the electro-conductive coil 33 flows in a clockwise direction, the current in the electro-conductive coil 35 flows in an anti-clockwise direction, and vice versa.

Each magnetic piston 27 comprises a cylindrical body 37, integral with which is a cylindrical permanent magnet 39, which defines opposite North and South magnetic poles, indicated with 39N and 39S. In rest conditions, the permanent magnet 39 is arranged in a median position between the two electro-conductive coils 33, 35. In the illustrated embodiment, the axial dimensions of the permanent magnet 39 and of the electro-conductive coils 33, 35 are such that in this position the two faces of the cylindrical permanent magnet 39 are approximately halfway along the axial development of the two electro-conductive coils 33, 35, as shown in Fig. 3.

Two discs 41 of material with high magnetic permeability are applied to the two faces of the cylindrical permanent magnet 39, for example of the same material of which the cylindrical wall 29 is made.

The configuration of the cylindrical wall 29 and of the discs 41 is such as to define a magnetic circuit, in which the lines of force F of the permanent magnetic field generated by the permanent magnet 39 are confined.

As mentioned, the two electro-conductive coils 33, 35 of each actuator 23 are connected in series and are accessible from the outside via terminals 43. The terminals 43 of the two pairs of electro-conductive coils 33, 35 of the two magnetic actuators 23 can be connected to the same current source, schematically indicated in Fig. 3 with 45. The connection can be such that the electro-conductive coils 33, 35 of one magnetic actuator 23 are in series or in parallel with the electro-conductive coils 33, 35 of the other magnetic actuator 23. The choice of the type of connection, series or parallel, depends on the driving electronics used. By arranging the electro-conductive coils 33, 35 of the two magnetic actuators 23 in series, a high resistance and limited current are obtained. Conversely, by arranging the electro-conductive coils 33, 35 of the two magnetic actuators 23 in parallel with each other, a lower resistance and a higher current are obtained.

The current generated by the source 45, which flows in the first electro-conductive coil 33 of each magnetic actuator 23 interacts with the radial lines of force F generated by the field of a pole (in the example the pole 39N) of the permanent magnet 39, while the current flowing in the second electro-conductive coil 35 interacts with the radial lines of force F generated by the opposite pole, in the example the south pole 39S. Since the electro-conductive coils 33, 35 are connected in such a way that the currents circulate in opposite directions, they generate on the magnetic piston 27 two equal and concordant forces oriented in the direction of the axis of the cylindrical wall 29 and of the magnetic piston 27, indicated with B-B in Fig. 3, and which constitutes the axis of motion of the actuator 23, parallel to the translation axis Z.

Since the features of the two magnetic actuators 23 are the same, apart from constructive tolerances, by making the same current flow in the electro-conductive coils 33, 35 of the two magnetic actuators 23, the two magnetic pistons 27 generate equal thrust forces on the optical unit 5, except for construction tolerances.

The two magnetic pistons 27 protrude from the electromagnetic stators with ends 27A, by means of which the magnetic pistons are fixed to the slide 11, and more exactly to the arms 19A, 19B. In advantageous embodiments, the attachment points of the two magnetic pistons 27 to the slide 11 are located at the two ends of a straight line segment, the mid-point whereof is substantially located in the centre of mass of the movable optical unit 5. This geometry is aimed at minimizing the generation of twisting moments on the optical unit 5 during the application of the thrust forces generated by the magnetic actuators 23.

By applying the same current to the two magnetic actuators 23, the optical unit 5 is urged by a resultant force parallel to the axis Z (and to the optical axis A-A of the focusing lens 7), passing through the centre of mass of the optical unit and no lateral forces are generated which could move, deform, or cause the optical unit 5 to vibrate laterally.

As a further improvement, measures are provided to limit the effect of any thermal gradients induced by the heating due to the circulation of the currents in the electro-conductive coils 33, 35 of the magnetic actuators 23, and consequent differential expansions in the various areas of the device 1.

To this end, as can be seen in particular in Figs. 4, 5A, 5B, one of the arms 19A, 19B (in the example the arm 19A) has notches 51, 53 which allow the arm to deform following any differential thermal expansion, reducing the thermally induced stresses to a minimum. The thermal expansion and consequent deformation of the arm 19A can be appreciated from the comparison between Fig. 5A (condition without thermal expansion) and Fig. 5B, in which the notches 51, 53 allow an elastic flexural deformation of the arm 19A in the direction parallel to the line joining the two shoes 17. The notches 51, 53 are such as not to reduce the stiffness of the arm 19A in the direction Z, along which there must be no deformations, either thermally induced or induced by the inertia forces generated by the motion in the direction Z, so as to keep the optical axis A-A of the focusing lens 7 in the correct position in all operating conditions of the movement device 1.

To detect the exact position of the optical unit 5 with respect to the base 13, and therefore with the body 3, in some embodiments a device is provided for detecting the relative position of the optical unit 5 with respect to the body 3, hereinafter also referred to as "sensor" and collectively indicated with 71 (Fig. 2). In the illustrated embodiment, the sensor 71 comprises an electromagnetic radiation emitter, for example a LED 73, typically operating in the near infrared (IR), which generates a light beam. The light beam is detected by a detector 75, for example a linear position detector, which can be mounted on a board 76. The detector 75 is integral with the base 13 of the body 3, while the emitter 73 is integral with the optical unit 5. In the illustrated embodiment, the sensor 71 is placed in an intermediate position between the two linear guides 15, with the emitter fixed on the part of the optical unit 5 facing the base 13 and towards the linear position detector 75, which is mounted in the base 13. A plate 77 integral with the optical unit 5 shields the linear position detector 75 from external radiation.

The emitter 73 can be supplied with constant current to generate a constant luminous flux incident on the surface of the linear position detector 75. At the output of the linear position detector 75, two photo-currents are generated which are proportional to the luminous flux generated by the emitter 73, the intensities of which depend on the relative position between the emitter 73 and the linear position detector 75. By combining the sum and the difference of the two photo-currents it is possible to determine with high precision and resolution the relative position of the centroid of the light spot generated by the emitter 73 which strikes the sensitive surface of the linear position detector 75, with respect to the centre of said surface, and therefore ultimately the position of the slide 11 with respect to the base 13 of the body 3.

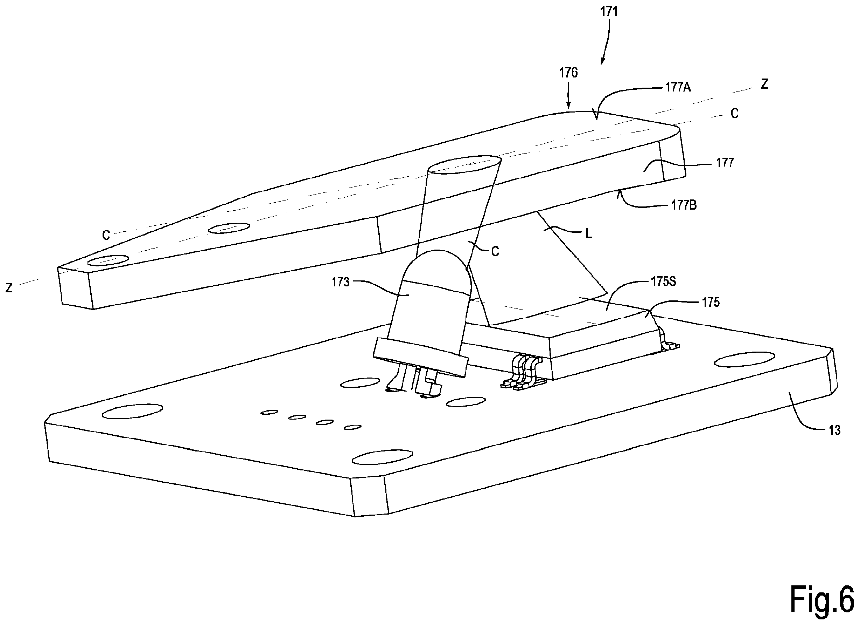

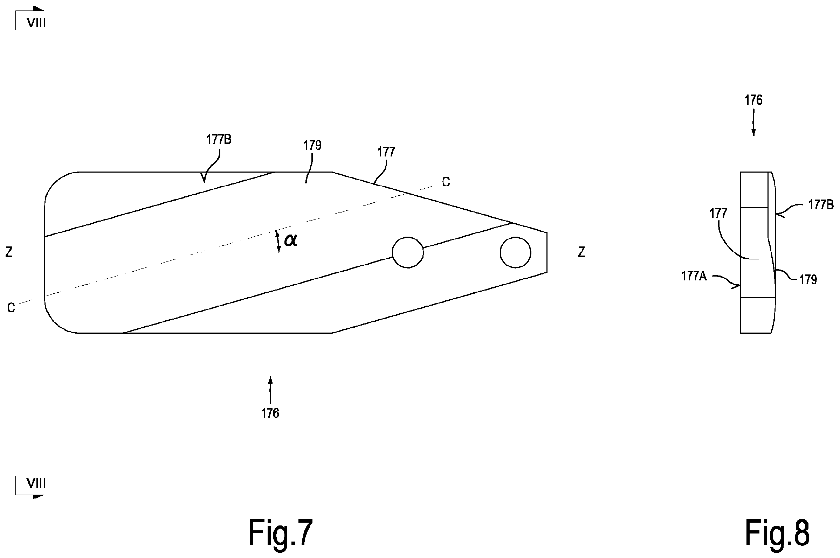

An improved embodiment of the position sensor, which is not covered by the subject-matter of the claims, is illustrated in Figs. 6 to 14 The sensor, indicated with 171, can be used in the device described herein, but can find advantageous use in any device in which it is necessary to detect the position of a member which moves along a translation trajectory.

The sensor 171 comprises an electromagnetic radiation emitter 173, similar to the emitter 73, and a position detector 175, similar to the detector 75. In the sensor 171, the emitter 73 and the detector 175 are stationary with respect to each other. When used in the device 1, the emitter 173 and the detector 175 can both be integral with the base 13. To detect a relative displacement between the base 13 and the optical unit 5 (or more generally between two components provided with a relative movement with respect to each other), the sensor 175 is provided with a cylindrical lens 177, which is integral with the optical unit 5.

The cylindrical lens 177 is formed on an optical component 176 having a preferably flat surface 177A facing away from the emitter 173 and the detector 175 and coated with a reflective material. The surface 177A can be metallized, for instance. The optical component also has a surface 177B facing the emitter 173 and the detector 175 and provided with a cylindrical portion.

The cylindrical portion of the surface 177B is indicated with 179 and forms the actual cylindrical lens. The axis of the cylindrical lens 177, i.e., the axis of the cylindrical surface 179, is indicated with C-C.

The component forming the cylindrical lens 177 is mounted on the optical unit 5 in such a way that the axis C-C of the cylindrical lens 177 is inclined by an angle α with respect to the translation direction Z of the optical unit 5. The direction Z corresponds to the median axis of the optical element which configures the cylindrical lens 177.

The beam of electromagnetic radiation emitted by the emitter 173, for example a near infrared LED, forms a very narrow cone C which illuminates the cylindrical surface 179 of the cylindrical lens 177, passes through the cylindrical lens 177 and is reflected by the metallized flat surface 177A. The reflected beam passes through the cylindrical lens again and exits the surface 179 in the form of a blade of light L which strikes a sensitive surface 175S of the position detector 175. The detection axis of the detector 175 is perpendicular to the translation axis Z of the optical unit 5. In substance, the detection axis of the detector 175 is the axis along which the spot of the electromagnetic radiation, generated by the emitter 173 and reflected by the optical component 176 towards the detector 175, moves.

The sensitive surface 175S of the position detector 175 is preferably flat and preferably parallel to the reflective surface 177A of the optical component 176.

The electromagnetic radiation reflected by the cylindrical lens 177 and incident on the sensitive surface 175S of the detector 175 is an ellipsoidal-shaped spot having the major axis perpendicular to the axis C-C of the cylinder of the cylindrical lens 177.

As a result of the inclination α of the axis C-C with respect to the direction of motion Z, the displacement of the cylindrical lens 177 integrally with the carriage 11 and with the optical unit 5 along the translation axis Z causes the axis of the blade of reflected light to tilt, i.e. the major axis of the ellipse projected onto the sensitive surface 175S, proportionally to the movement of the carriage 11 and of the optical unit 5. In other words, the centroid of the ellipsoidal spot incident on the sensitive surface 175S of the detector 175 moves along the axis of the sensitive surface in proportion to the movement of the carriage along the translation axis.

The axis of the sensitive surface, i.e. the detection axis, is in substance the straight line on the sensitive surface, along which the displacement of the centroid of the elliptical spot incident on the sensitive surface 175S of the detector 175 is detected.

The emitter 173 is supplied with constant current and generates a constant luminous flux incident on the sensitive surface 175S of the detector 175. At the output of the detector 175, 2 photo-currents (Ia and Ib) are generated, the sum of which is proportional to the luminous flux generated by the emitter 173, and the difference of which is proportional to the position of the centroid of the spot incident on the sensitive surface 175S with respect to the centre of the sensitive surface and therefore proportional to the position of the centroid of the spot along the axis of the sensitive surface 175S.

Since the detection axis of the sensitive surface 175S is orthogonal, i.e. oriented at 90°, with respect to the direction of relative motion between the optical unit 5 and the emitter 173, i.e. to the Z axis, the difference between the two photo-currents is a function of the relative position of the spot (and more specifically of the centroid thereof) along the direction orthogonal to the axis Z. The position of the spot along the detection axis of the sensitive surface 175S, which is detected based on the difference between the two photo-currents, is a function of the relative position between the optical unit 5 and the stationary structure (body 3), wherewith the emitter 173 is integral.

By combining the sum and the difference of the two photo-currents it is possible to determine with extremely high precision and resolution the relative position of the centroid of the spot which strikes the sensitive surface 175S with respect to the centre of the sensitive surface 175 and definitively the position of the carriage 11 and of the optical unit 5 along the translation axis Z.

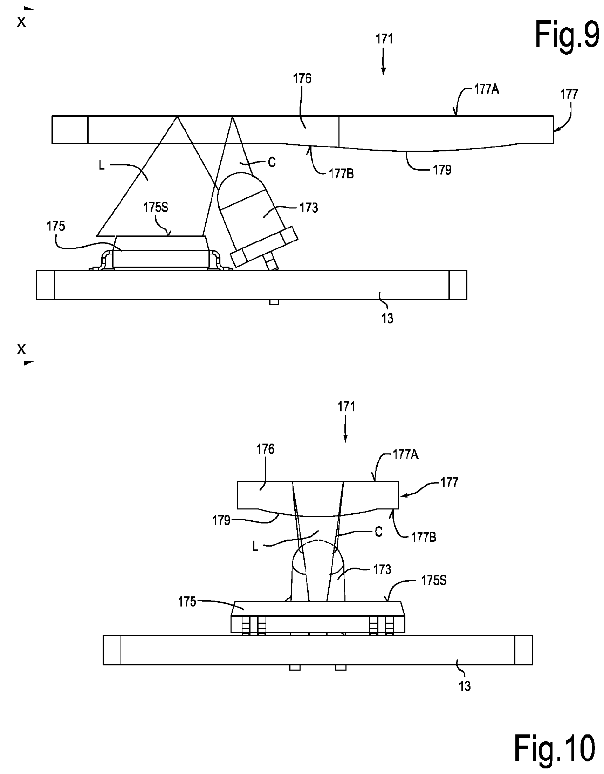

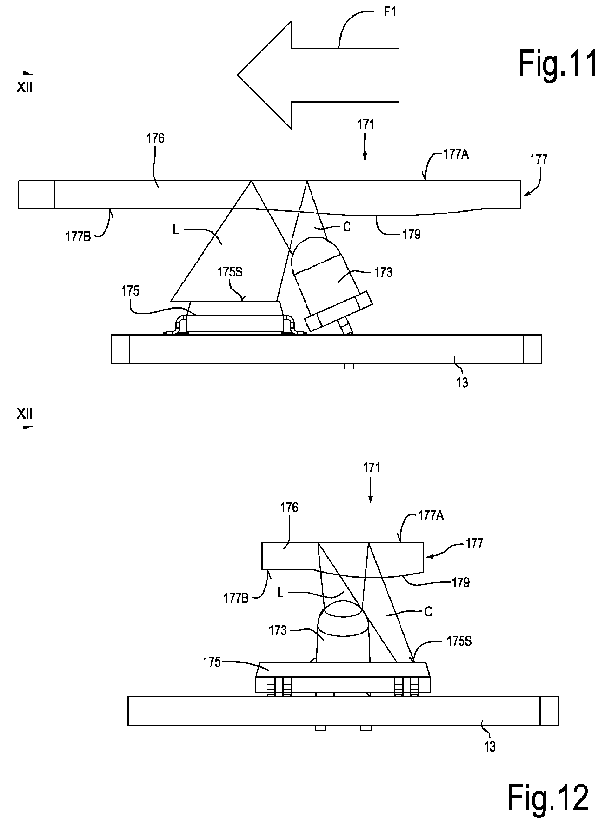

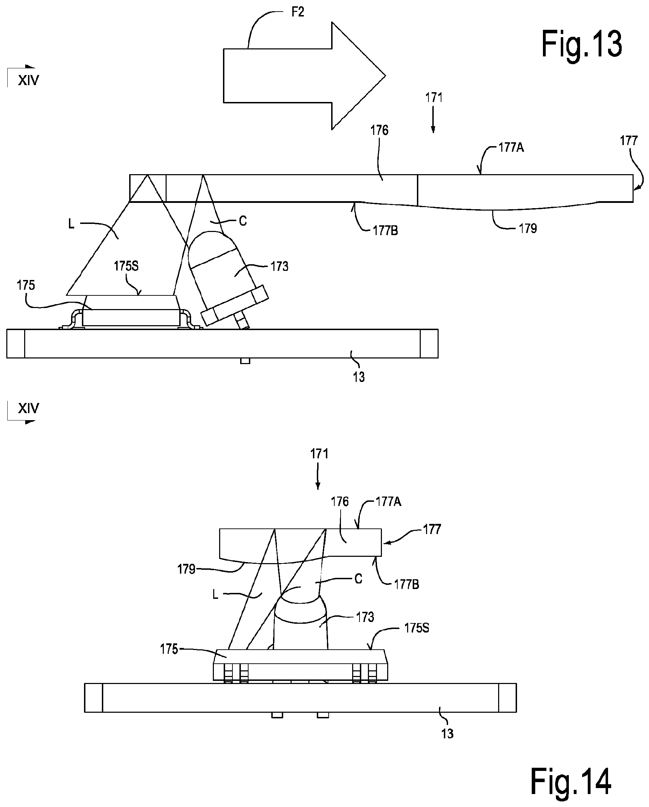

The movements described above of the blade L of electromagnetic radiation reflected and outgoing from the cylindrical lens 177 and of the centroid of the electromagnetic radiation spot formed by the blade L of electromagnetic radiation on the sensitive surface 175S of the detector 175 are visually represented in Figs. 9 to 14. In particular, Figs. 9 and 10 show the position of the conical beam C and of the blade L when the cylindrical lens 177 and therefore the optical unit 5 are in a central position. Figs. 11 and 12 show the position of the blade L of electromagnetic radiation when the cylindrical lens 177 (and therefore the optical unit 5 integral with it) are moved completely to the left (in the drawing) as represented by the arrow F1. Figs. 13 and 14 show the position of the blade L of electromagnetic radiation when the cylindrical lens 177 (and therefore the optical unit 5 integral with it) are moved completely to the right (in the drawing) as represented by the arrow F2.

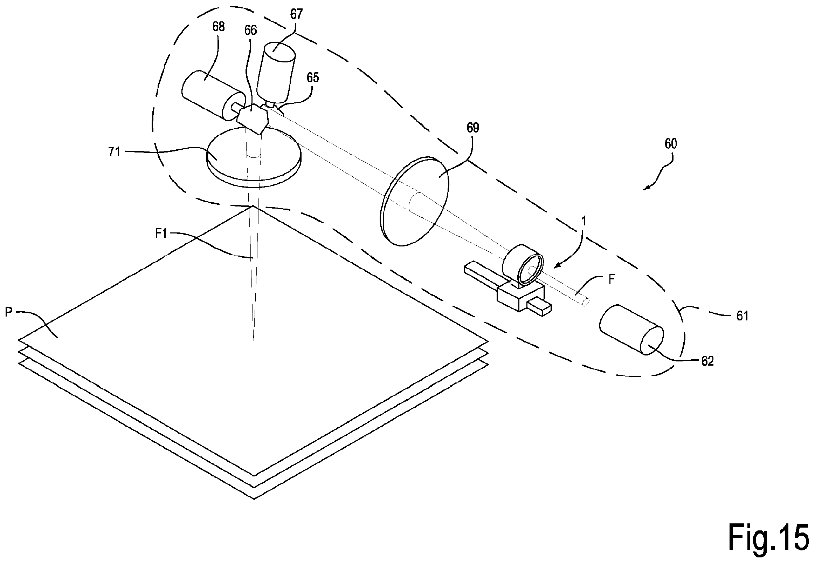

Fig. 15 schematically shows an example of use of a movement device 1 of the type described above. Fig. 15 shows an apparatus 60 comprising a laser head 61 comprising, or associated with, a laser source 62. F indicates the laser beam generated by the laser source 62. In the embodiment schematically illustrated in Fig. 15 the laser source is aligned with the movement device 1, comprising the optics 7. The laser beam F which emerges from the optics 7 is controlled by one or two deflection mirrors, or scanning mirrors 65, 66, which can pivot around two axes which are not parallel to each other, for example orthogonal to one another, under the control of two actuators 67, 68, for example two galvanometers. A fixed focusing lens 69 is placed between the scanning mirrors and the movement device 1. The laser beam F1 deflected by the deflection mirrors 65, 66 passes through a lens 71 and affects an object to be worked, for example to be engraved, marked or cut, schematically indicated with P.

## Claims

1. A device (1) for the movement of a focusing lens (7) along an optical axis (A-A) of the focusing lens (7), the device comprising:
a body (3);
an optical unit (5), movable with respect to the body (3) along a translation axis (Z) and adapted to house the focusing lens (7) with the optical axis (A-A) of the focusing lens (7) parallel to the translation axis (Z) of the optical unit (5);
a linear guide system parallel to the translation axis (Z); wherein the optical unit comprises a slide (11) adapted to slide along said linear guide system ;and
a first magnetic actuator (23) comprising a first electromagnetic stator (25) integral with the body (3) and a first magnetic piston (27) constrained to the optical unit (5); wherein the first magnetic piston (27) is housed in a first seat (24) formed in the first electromagnetic stator (25) and movable along a first axis of motion (B-B) parallel to the translation axis (Z) of the optical unit (5);
**characterized by** further comprising a second magnetic actuator (23), comprising a second electromagnetic stator (25) integral with the body (3) and a second magnetic piston (27) constrained to the optical unit (5); wherein the second magnetic piston (27) is housed in a second seat (24) formed in the second electromagnetic stator (25) and movable along a second axis of motion (B-B) parallel to the translation axis (Z) of the optical unit (5); wherein the first magnetic actuator (23) and the second magnetic actuator (23) are arranged symmetrically with respect to a plane of symmetry of the optical unit (5), orthogonal to a plane containing the first axis of motion (B-B) of the first magnetic actuator (23) and of the second axis of motion (B-B) of the second magnetic actuator (23); wherein the linear
guide system comprises a first guide (15) and a second guide (15), parallel to one another and symmetrical with respect to the plane of symmetry; and wherein the slide (11) comprises a first shoe (17) slidingly engaged in the first guide (15) and a second shoe (17) slidingly engaged in the second guide (15).

2. The device (1) of claim 1, wherein at least one of said first shoe (17) and second shoe (17) is connected to the optical unit (5) by an arm (19A) with notches (51, 53) adapted to allow flexional deformations of the arm in a direction connecting the centres of the first shoe (17) and the second shoe (17).

3. The device (1) of claim 1 or 2, wherein each magnetic piston (27) has a cylindrical shape with an axis parallel to the direction of movement of the magnetic piston and with opposing magnetic poles (39N, 39S) aligned along the axis of the magnetic piston (27).

4. The device (1) of one or more of the previous claims, wherein each electromagnetic stator (25) comprises a cylindrical wall defining a cavity, within which the respective magnetic piston is slidingly housed, and wherein the cylindrical wall (29) of each electromagnetic stator (25) is associated with at least a first electro-conductive coil (33; 35) of the electromagnetic stator (25), wherein the first electro-conductive coil (33; 35) surrounds the respective magnetic piston (27) and is coaxial thereto.

5. The device (1) of claim 4, wherein the cylindrical wall (29) of each electromagnetic stator (25) is associated with a second electro-conductive coil (35; 33) of the electromagnetic stator (25), wherein the second electro-conductive coil (35; 33) surrounds the respective magnetic piston (27) and is coaxial thereto; wherein preferably the first electro-conductive coil (33; 35) and the second electro-conductive coil (35; 33) are connected to one another in series; and wherein preferably the first electro-conductive coil (33; 35) and the second electro-conductive coil (35; 33) of each magnetic actuator (23) are wound and can be connected to a source of current, so as to generate two opposing electromagnetic fields, which cooperate with two opposing magnetic poles (39N, 39S) of the respective magnetic piston (27).

6. The device (1) of claim 5, wherein the electro-conductive coils (33; 35) of the first magnetic actuator (23) and of the second magnetic actuator (23) are connected to one another in series or in parallel to two poles adapted to connect to an electrical power source.

7. The device (1) of one or more of claims 4 to 6, wherein the cylindrical wall (29) of each electromagnetic stator (25) is made of a material with high magnetic permeability and surrounds the electro-conductive coil or coils (33; 35) associated therewith.

8. The device (1) of claim 7, wherein each magnetic piston (27) comprises a cylindrical body featuring the two opposing magnetic poles (39S, 39N), and two opposing discs (41) with high magnetic permeability associated with two opposing ends of the cylindrical body; and wherein the cylindrical wall (29) of high magnetic permeability material and the two discs (41) with high magnetic permeability form a magnetic circuit in the respective magnetic actuator (23).

9. The device (1) of one or more of claims 4 to 8, wherein each magnetic actuator (23) comprises a system for dissipating the heat generated by the electro-conductive coils, preferably comprising one of: a thermic coupling between each electro-conductive coil and the respective cylindrical wall (29) of the electromagnetic stator (25); or a circuit for the transfer of heat from the cylindrical wall (29) of the electromagnetic stator (25) to the body (3), or both.

10. The device (1) of one or more of the preceding claims, wherein the first magnetic piston (29) and the second magnetic piston (29) are mechanically connected to the optical unit (5) at two points located on the ends of a segment, the mid-point whereof coincides with the centre of mass of the optical unit (5).

11. The device (1) of one or more of the previous claims, comprising a position sensor (71; 171), adapted to detect the relative position of the optical unit (5) with respect to the body (3).

12. The device (1) of claim 11, wherein the position sensor (71; 171) comprises an electromagnetic radiation emitter (73; 173) and a linear position detector (75; 175), having a sensitive surface adapted to receive electromagnetic radiation emitted by the electromagnetic radiation emitter (73; 173); wherein the position detector (75; 175) is adapted to generate a signal that is a function of the position of a spot of electromagnetic radiation generated by the emitter (73; 173) on the sensitive surface of the position detector; wherein preferably the linear position detector is associated with a screen of the optical unit and adapted to screen external radiations; and wherein preferably the emitter (73) is integral with the optical unit (5), and wherein the position detector is integral with the body (3); and wherein the movement of the optical unit (5) along the translation axis (Z) causes a movement of the spot of electromagnetic radiation on the sensitive surface of the linear position detector (75) in a direction parallel to the direction of the translation axis (Z)

13. The device (1) of claim 12, wherein the electromagnetic radiation emitter (173) and the linear position detector (175) are fixed with respect to one another and are integral with one of said body (3) and said optical unit (5); the position sensor comprises a cylindrical lens (177), movable integrally with the other of said body (3) and said optical unit (5), so that a relative movement between the optical unit (5) and the body (3) causes a relative movement between the cylindrical lens (177) and the linear position detector (175); wherein the cylindrical lens (177) has an axis (C-C) inclined with respect to the direction of translation (Z) of the optical unit (5); wherein the cylindrical lens has a transparent surface (177B) facing the emitter (173) and the detector (175), and an opposing reflective surface (177A), so that a beam of electromagnetic radiation emitted by the emitter (173) can pass through the cylindrical lens and can be reflected towards the linear position detector (175), forming a spot on the sensitive surface (175S) of the detector, the position of said spot being a function of the mutual position between the cylindrical lens (177) and linear position detector (175).

14. The device (1) of one or more of the previous claims, wherein the optical unit (5) comprises a sleeve (9) adapted to house a focusing lens (7), the sleeve preferably being interchangeable; and wherein the sleeve is preferably fixed in a manner allowing it to be removed from the slide (11), for example by means of a threaded ring nut (22).

15. A laser head comprising a laser source and a device according to one or more of the previous claims.

16. An item of equipment comprising a laser head according to claim 15, and a system for reciprocal movement between a laser beam emitted by the laser source and a piece to be worked on using the laser beam.

## Patentansprüche

1. Vorrichtung (1) zum Bewegen einer Fokussierlinse (7) entlang einer optischen Achse (A-A) der Fokussierlinse (7), wobei die Vorrichtung umfasst:
- einen Körper (3);
- eine optische Einheit (5), die in Bezug auf den Körper (3) entlang einer Translationsachse (Z) beweglich ist und dazu ausgebildet ist, die Fokussierlinse (7) aufzunehmen, wobei die optische Achse (A-A) der Fokussierlinse (7) parallel zur Translationsachse (Z) der optischen Einheit (5) verläuft;
- ein lineares Führungssystem parallel zur Translationsachse (Z); wobei die optische Einheit einen Schlitten (11) umfasst, der dazu ausgebildet ist, entlang des linearen Führungssystems zu gleiten; und
- einen ersten magnetischen Aktuator (23), der einen ersten elektromagnetischen Stator (25), der einstückig mit dem Körper (3) ausgebildet ist, und einen ersten magnetischen Kolben (27) umfasst, der an der optischen Einheit (5) angebracht ist; wobei der erste Magnetkolben (27) in einem ersten Sitz (24) aufgenommen ist, der in dem ersten elektromagnetischen Stator (25) ausgebildet ist und entlang einer ersten Bewegungsachse (B-B) parallel zur Translationsachse (Z) der optischen Einheit (5) bewegbar ist;
**dadurch gekennzeichnet, dass** ferner ein zweiter Magnetaktuator (23) umfasst ist, der einen zweiten elektromagnetischen Stator (25), der mit dem Körper (3) einstückig ausgebildet ist, und einen zweiten Magnetkolben (27) umfasst, der an der optischen Einheit (5) angebracht ist; wobei der zweite Magnetkolben (27) in einem zweiten Sitz (24) aufgenommen ist, der in dem zweiten elektromagnetischen Stator (25) ausgebildet ist und entlang einer zweiten Bewegungsachse (B-B) parallel zur Translationsachse (Z) der optischen Einheit (5) beweglich ist; wobei der erste Magnetaktuator (23) und der zweite Magnetaktuator (23) symmetrisch zu einer Symmetrieebene der optischen Einheit (5) angeordnet sind, die orthogonal zu einer Ebene ist, die die erste Bewegungsachse (B-B) des ersten Magnetaktuators (23) und die zweite Bewegungsachse (B-B) des zweiten Magnetaktuators (23) enthält; wobei das Linearführungssystem eine erste Führung (15) und eine zweite Führung (15) umfasst, die parallel zueinander und symmetrisch in Bezug auf die Symmetrieebene angeordnet sind; und wobei der Schlitten (11) einen ersten Schuh (17), der gleitend in der ersten Führung (15) eingreift, und einen zweiten Schuh (17) umfasst, der gleitend in der zweiten Führung (15) eingreift.

2. Vorrichtung (1) gemäß Anspruch 1, wobei der erste Schuh (17) und/oder der zweite Schuh (17) über einen Arm (19A) mit Aussparungen (51, 53) mit der optischen Einheit (5) verbunden ist, die so ausgelegt sind, dass sie Biegeverformungen des Arms in einer Richtung ermöglichen, die die Mittelpunkte des ersten Schuhs (17) und des zweiten Schuhs (17) verbindet.

3. Vorrichtung (1) gemäß Anspruch 1 oder 2, wobei jeder Magnetkolben (27) eine zylindrische Form mit einer Achse parallel zur Bewegungsrichtung des Magnetkolbens und mit gegenüberliegenden Magnetpolen (39N, 39S) aufweist, die entlang der Achse des Magnetkolbens (27) ausgerichtet sind.

4. Vorrichtung (1) gemäß einem oder mehreren der vorhergehenden Ansprüche, wobei jeder elektromagnetische Stator (25) eine zylindrische Wand umfasst, die einen Hohlraum definiert, in dem der jeweilige Magnetkolben gleitend aufgenommen wird, und wobei die zylindrische Wand (29) jedes elektromagnetischen Stators (25) mit mindestens einer ersten elektrisch leitenden Spule (33; 35) des elektromagnetischen Stators (25) verbunden ist, wobei die erste elektrisch leitende Spule (33; 35) den jeweiligen Magnetkolben (27) umgibt und zu diesem koaxial ist.

5. Vorrichtung (1) gemäß Anspruch 4, wobei die zylindrische Wand (29) jedes elektromagnetischen Stators (25) mit einer zweiten elektrisch leitenden Spule (35; 33) des elektromagnetischen Stators (25) verbunden ist, wobei die zweite elektrisch leitende Spule (35; 33) den jeweiligen Magnetkolben (27) umgibt und zu diesem koaxial ist; wobei vorzugsweise die erste elektrisch leitende Spule (33; 35) und die zweite elektrisch leitende Spule (35; 33) in Reihe miteinander verbunden sind; und wobei vorzugsweise die erste elektrisch leitende Spule (33; 35) und die zweite elektrisch leitende Spule (35; 33) jedes Magnetaktuators (23) gewickelt und mit einer Stromquelle verbunden werden können, sodass zwei entgegengesetzte elektromagnetische Felder erzeugt werden, die mit zwei entgegengesetzten Magnetpolen (39N, 39S) des jeweiligen Magnetkolbens (27) zusammenwirken.

6. Vorrichtung (1) gemäß Anspruch 5, wobei die elektrisch leitenden Spulen (33; 35) des ersten Magnetaktuators (23) und des zweiten Magnetaktuators (23) in Reihe oder parallel mit zwei Polen verbunden sind, die zum Anschluss an eine Antriebsquelle ausgebildet sind.

7. Vorrichtung (1) gemäß einem oder mehreren der Ansprüche 4 bis 6, wobei die zylindrische Wand (29) jedes elektromagnetischen Stators (25) aus einem Material mit hoher magnetischer Permeabilität besteht und die damit verbundene elektrisch leitende Spule oder die damit verbundenen elektrisch leitenden Spulen (33; 35) umgibt.

8. Vorrichtung (1) gemäß Anspruch 7, wobei jeder Magnetkolben (27) einen zylindrischen Körper umfasst, der die beiden gegenüberliegenden Magnetpole beinhaltet (39S, 39N) aufweist, sowie zwei gegenüberliegende Scheiben (41) mit hoher magnetischer Permeabilität, die mit zwei gegenüberliegenden Enden des zylindrischen Körpers verbunden sind; und wobei die zylindrische Wand (29) aus Material mit hoher magnetischer Permeabilität und die beiden Scheiben (41) mit hoher magnetischer Permeabilität einen Magnetkreis im jeweiligen Magnetaktuator (23) bilden.

9. Vorrichtung (1) gemäß einem oder mehreren der Ansprüche 4 bis 8, wobei jeder Magnetaktuator (23) ein System zum Ableiten der von den elektrisch leitenden Spulen erzeugten Wärme umfasst, das vorzugsweise eines der folgenden Elemente umfasst: eine thermische Kopplung zwischen jeder elektrisch leitenden Spule und der jeweiligen zylindrischen Wand (29) des elektromagnetischen Stators (25); oder einen Kreislauf zur Übertragung von Wärme von der zylindrischen Wand (29) des elektromagnetischen Stators (25) zum Körper (3), oder beides.

10. Vorrichtung (1) gemäß einem oder mehreren der vorangegangenen Ansprüche, wobei der erste Magnetkolben (29) und der zweite Magnetkolben (29) an zwei Punkten, die sich an den Enden eines Segments befinden, dessen Mittelpunkt mit dem Schwerpunkt der optischen Einheit (5) zusammenfällt, mechanisch mit der optischen Einheit (5) verbunden sind.

11. Vorrichtung (1) gemäß einem oder mehreren der vorhergehenden Ansprüche, umfassend einen Positionssensor (71; 171), der dazu ausgebildet ist, die relative Position der optischen Einheit (5) in Bezug auf den Körper (3) zu erfassen.

12. Vorrichtung (1) gemäß Anspruch 11, wobei der Positionssensor (71; 171) einen elektromagnetischen Strahlungsemitter (73; 173) und einen linearen Positionsdetektor (75; 175) umfasst, der eine empfindliche Oberfläche aufweist, die ausgebildet ist, um vom elektromagnetischen Strahlungsemitter (73; 173) emittierte Strahlung zu detektieren; wobei der Positionsdetektor (75; 175) dazu ausgebildet ist, ein Signal zu erzeugen, das der Position eines vom Emitter (73; 173) erzeugten elektromagnetischen Strahlungsflecks auf der empfindlichen Oberfläche des Positionsdetektors dient; wobei der lineare Positionsdetektor vorzugsweise mit einem Schirm der optischen Einheit verbunden und dazu ausgebildet ist, externe Strahlungen abzuschirmen; und wobei der Emitter (73) einstückig mit der optischen Einheit (5) ausgebildet ist und wobei der Positionsdetektor einstückig mit dem Körper (3) ausgebildet ist; und wobei die Bewegung der optischen Einheit (5) entlang der Translationsachse (Z) eine Bewegung des elektromagnetischen Strahlungsflecks auf der empfindlichen Oberfläche des linearen Positionsdetektors (75) in einer Richtung parallel zur Richtung der Translationsachse (Z) bewirkt.

13. Vorrichtung (1) gemäß Anspruch 12, wobei der elektromagnetische Strahlungsemitter (173) und der lineare Positionsdetektor (175) relativ zueinander feststehend einstückig mit einer der beiden Teile Körper (3) und optische Einheit (5) ausgebildet sind; der Positionssensor umfasst eine Zylinderlinse (177), die mit dem anderen Teil Körper (3) und optische Einheit (5) gemeinsam beweglich ist, sodass eine Relativbewegung zwischen der optischen Einheit (5) und dem Körper (3) eine Relativbewegung zwischen der Zylinderlinse (177) und dem linearen Positionsdetektor (175) bewirkt; wobei die Zylinderlinse (177) eine Achse (C-C) aufweist, die in Bezug auf die Translationsrichtung (Z) der optischen Einheit (5) geneigt ist; wobei die Zylinderlinse eine transparente Oberfläche (177B), die dem Emitter (173) und dem Detektor (175) zugewandt ist, und eine gegenüberliegende reflektierende Oberfläche (177A) aufweist, sodass ein vom Emitter (173) emittierter Strahl elektromagnetischer Strahlung durch die Zylinderlinse hindurchtreten und zum linearen Positionsdetektor (175) reflektiert werden kann, wobei er einen Punkt auf der empfindlichen Oberfläche (175S) des Detektors bildet, wobei die Position des Punktes abhängig von der gegenseitigen Lage der Zylinderlinse (177) und des linearen Positionsdetektors (175) ist.

14. Vorrichtung (1) gemäß einem oder mehreren der vorhergehenden Ansprüche, wobei die optische Einheit (5) eine Hülse (9) umfasst, die eine Fokussierlinse (7) aufnehmen kann, wobei die Hülse vorzugsweise austauschbar ist; und wobei die Hülse vorzugsweise so befestigt ist, dass sie von dem Schlitten (1D) entfernt werden kann, beispielsweise mittels einer Gewindemutter (22).

15. Laserkopf, der eine Laserquelle und eine Vorrichtung gemäß einem oder mehreren der vorhergehenden Ansprüche umfasst.

16. Ausrüstungsgegenstand, der einen Laserkopf gemäß Anspruch 15 und ein System für die Hin- und Herbewegung zwischen einem von der Laserquelle emittierten Laserstrahl und einem mit dem Laserstrahl zu bearbeitenden Werkstück umfasst.

## Revendications

1. Un dispositif (1) pour le déplacement d'une lentille de mise au point (7) le long d'un axe optique (A-A) de la lentille de mise au point (7), ce dispositif comprenant :
un corps (3)
une unité optique (5) mobile par rapport au corps (3) le long d'un axe de translation (Z) et apte à loger la lentille de mise au point (7), l'axe optique (A-A) de la lentille de mise au point (7) étant parallèle à l'axe de translation (Z) de l'unité optique (5) ;
un système de guidage linéaire parallèle à l'axe de translation (Z) ; l'unité optique comprenant un coulisseau (11) apte à coulisser le long dudit système de guidage linéaire ; et
un premier actionneur magnétique (23) comprenant un premier stator électromagnétique (25) solidaire avec le corps (3) et un premier piston magnétique (27) lié à l'unité optique (5) ; le premier piston magnétique (27) étant logé dans un premier logement (24) formé dans le premier stator électromagnétique (25) et mobile le long d'un premier axe de déplacement (B-B) parallèle à l'axe de translation (Z) de l'unité optique (5) ;
**caractérisé en ce qu'**il comprend en outre un deuxième actionneur magnétique (23) comprenant un deuxième stator électromagnétique (25) solidaire avec le corps (3) et un deuxième piston magnétique (27) lié ä l'unité optique (5) ; le deuxième piston magnétique (27) étant logé dans un deuxième logement (24) formé dans le deuxième stator électromagnétique (25) et mobile le long d'un deuxième axe de déplacement (B-B) parallèle à l'axe de translation (Z) de l'unité optique (5) ; le premier actionneur magnétique (23) et le deuxième actionneur magnétique (23) étant agencés symétriquement par rapport au plan de symétrie de l'unité optique (5), perpendiculaire à un plan contenant le premier axe de déplacement (B-B) du premier actionneur magnétique (23) et du deuxième axe de déplacement (B-B) du deuxième actionneur magnétique (23) ; le système de guidage comprenant un premier guide (15) et un deuxième guide (15), parallèles l'un à l'autre et symétriques par rapport au plan de symétrie ; le coulisseau (11) comprenant un premier sabot (17) engagé de façon coulissante dans le premier guide (15) et un deuxième sabot (17) engagé de façon coulissante dans le deuxième guide (15).

2. Le dispositif (1) selon la revendication 1, dans lequel au moins l'un desdits premier sabot (17) et deuxième sabot (17) est connecté à l'unité optique (5) par un bras (19A) avec des encoches (51, 53) aptes à permettre des déformations flexionnelles du bras dans une direction connectant les centres du premier sabot (17) et du deuxième sabot (17).

3. Le dispositif (1) selon la revendication 1 ou 2, dans lequel chaque piston magnétique (27) a une forme cylindrique avec un axe parallèle à la direction du mouvement du piston magnétique et avec des pôles magnétiques opposés (39N, 39S) alignés le long de l'axe du piston magnétique (27).

4. Le dispositif (1) selon l'une ou plusieurs des revendications précédentes, dans lequel chaque stator électromagnétique (25) comprend une paroi cylindrique formant une cavité, dans laquelle le piston magnétique respectif est logé coulissant et dans lequel la paroi cylindre (29) de chaque stator électromagnétique (25) est associé avec au moins une première bobine conductrice électrique (33 ; 35) du stator électromagnétique (25), la première bobine conductrice électrique (33 ; 35) entourant le piston magnétique respectif (27) et étant coaxial avec celui-ci.

5. Le dispositif (1) selon la revendication 4, dans lequel la paroi cylindrique (29) de chaque stator électromagnétique (25) est associée avec une deuxième bobine conductrice électrique (35 ; 33) du stator électromagnétique (25), la deuxième bobine conductrice électrique (35 ; 33) entourant le piston magnétique respectif (27) et étant coaxial avec celui-ci ; la première bobine conductrice électrique (33 ; 35) et la deuxième bobine conductrice électrique (35 ; 33) étant de préférence connectés l'un à l'autre en série ; et la première bobine conductrice électrique (33 ; 35) et la deuxième bobine conductrice électrique (35 ; 33) de chaque actionneur magnétique (23) étant de préférence enroulés et pouvant être connectés à une source de courant, de manière à générer deux champs magnétiques opposés qui coopèrent avec deux pôles magnétiques opposés (39N, 39S) du piston magnétique respectif (27).

6. Le dispositif (1) selon la revendication 5, dans lequel les bobines conductrices électriques (33 ; 35) du premier actionneur magnétique (23) et du deuxième actionneur magnétique (23) sont connectés l'un à l'autre en série ou en parallèle à deux pôles aptes à se connecter à une source d'alimentation électrique.

7. Le dispositif (1) selon l'un ou plusieurs des revendications 4 à 6, dans lequel la paroi cylindrique (29) de chaque stator électromagnétique (25) est constituée d'un matériau avec une perméabilité magnétique élevée et entoure la ou les bobine(s) conductrice(s) électrique(s) (33 ; 35) associée(s) à elle.

8. Le dispositif (1) selon la revendication 7, dans lequel chaque piston magnétique (27) comprend un corps cylindrique formant deux pôles magnétiques opposés (395, 39N) et deux disques opposés (41) avec une perméabilité magnétique élevée associés à deux extrémités opposées du corps cylindrique ; et dans lequel la paroi cylindrique (29) de matériau à perméabilité magnétique élevée et les deux disques (41) à perméabilité magnétique élevée forment un circuit magnétique dans l'actionneur magnétique respectif (23).

9. Le dispositif (1) selon l'une ou plusieurs des revendications 4 à 8, dans lequel chaque actionneur magnétique (23) comprend un système pour dissiper la chaleur produite par les bobines conductrices électriques, comprenant de préférence l'un des éléments suivants : un couplage thermique entre chaque bobine conductrice électrique et la paroi cylindrique respective (29) du stator électromagnétique (25) ; ou un circuit pour le transfert de chaleur de la paroi cylindrique (29) du stator électromagnétique (25) au corps (3), ou les deux.

10. Le dispositif (1) selon l'une ou plusieurs des revendications précédentes, dans lequel le premier piston magnétique (29) et le deuxième piston magnétique (29) sont connectés mécaniquement à l'unité optique (5) à deux points situés sur les extrémités d'un segment dont le point médian coïncide avec le centre de gravité de l'unité optique (5).

11. Le dispositif (1) selon l'une ou plusieurs des revendications précédentes, comprenant un détecteur de position (71 ; 171) apte à détecter la position relative de l'unité optique (5) par rapport au corps (3).

12. Le dispositif (1) selon la revendication 11, dans lequel le détecteur de position (71 ; 171) comprend un émetteur de rayonnement électromagnétique (73 ; 173) et un détecteur de position linéaire (75 ; 175) ayant une surface sensible apte à recevoir une rayonnement électromagnétique émis par l'émetteur de rayonnement électromagnétique (73 ; 173) ; le détecteur de position (75 ; 175) étant apte à générer un signal qui est fonction de la position d'un point de rayonnement électromagnétique généré par l'émetteur (73 ; 173) sur la surface sensible du détecteur de position ; le détecteur de position linéaire étant de préférence associé à un écran de l'unité optique et apte à filtrer les rayonnements externes ; et l'émetteur (73) étant de préférence solidaire avec l'unité optique (5) ; le détecteur de position étant solidaire avec le corps (3) ; et le mouvement de l'unité optique (5) le long de l'axe de translation (Z) provoquant un mouvement du point de rayonnement électromagnétique sur la surface sensible du détecteur de position linéaire (75) dans une direction parallèle à la direction de l'axe de translation (Z).

13. Le dispositif (1) selon la revendication 12, dans lequel l'émetteur de rayonnement électromagnétique (173) et le détecteur de position linéaire (175) sont fixes l'un par rapport à l'autre et sont solidaires avec l'un dudit corps (3) et de ladite unité optique (5) ; le détecteur de position comprenant une lentille cylindrique (177) mobile solidairement avec l'autre dudit corps (3) et de ladite unité optique (5), de sorte qu'un mouvement relatif entre l'unité optique (5) et le corps (3) provoque un mouvement relatif entre la lentille cylindrique (177) et du détecteur de position linéaire (175) ; la lentille cylindrique (177) ayant un axe (C-C) incliné par rapport à la direction de translation (Z) de l'unité optique (5) ; la lentille cylindrique ayant une surface transparente (177B) faisant face à l'émetteur (173) et au détecteur (175), et une surface réfléchissante opposée (177A), de sorte qu'un faisceau de rayonnement électromagnétique émis par l'émetteur (173) puisse passer à travers la lentille cylindrique et puisse être réfléchi vers le détecteur de position linéaire (175), en formant un point sur la surface sensible (1755) du détecteur, la position dudit point étant fonction de la position relative entre la lentille cylindrique (177) et le détecteur de position linéaire (175).

14. Le dispositif (1) selon l'une ou plusieurs des revendications précédentes, dans lequel l'unité optique (5) comprend une douille (9) apte à loger une lentille de mise au point (7), la douille étant de préférence interchangeable ; et dans lequel la douille est de préférence fixée d'une manière lui permettant d'être retirée du coulisseau (11), par exemple au moyen d'un écrou annulaire fileté (22).

15. Une tête de laser comprenant une source laser et un dispositif selon l'une ou plusieurs des revendications précédentes.

16. Un élément d'équipement comprenant une tête laser selon la revendication 15 et un système pour un déplacement en va-et-vient entre un faisceau laser émis par la source laser et une pièce à usiner en utilisant le faisceau laser.
